# EUROPÄISCHE PATENTSCHRIFT

(11) **EP 0 451 759 B1**
(45) Veröffentlichungstag und Bekanntmachung des Hinweises auf die Patenterteilung: **20.11.1996**
(21) Anmeldenummer: 91105532.5
(22) Anmeldetag: 08.04.1991
(51) Int. Cl.: H04M 3/30, H04B 3/46

(54) **Verfahren zum Überprüfen von Übertragungseigenschaften einer Teilnehmeranschlussschaltung**
Method for testing the transmission characteristics of a subscriber line circuit
Méthode pour tester des caractéristiques de transmission d'un circuit de ligne d'abonné

(30) Priorität: 12.04.1990 DE 4011985
(43) Veröffentlichungstag der Anmeldung: 16.10.1991
(73) Patentinhaber: SIEMENS AKTIENGESELLSCHAFT, 80333 München (DE)
(72) Erfinder: Rudolf, Hans-Werner, W-8000 München 80 (DE)

(56) Entgegenhaltungen:
- EP-A- 0 286 835
- US-A- 4 611 320
- INTERNATIONAL TEST CONFERENCE PROCEEDINGS Oktober 1983, SILVER SPRING, US Seiten 750 - 766 HOFER ET AL. 'Digital signal processing test techniques for telecommunications integrated circuits'
- BRITISH TELECOMMUNICATIONS ENGINEERING Bd. 4, Nr. 4, Januar 1986, LONDON, GB Seiten 203 - 206 AMES 'Subscriber line interfaces'

## Beschreibung

Die Erfindung betrifft ein Verfahren zum Überprüfen von Übertragungseigenschaften einer Teilnehmeranschlußschaltung samt angeschlossener Teilnehmeranschlußleitung und daran angeschlossenem Teilnehmerendgerät eines digitalen Zeitmultiplex-Fernmeldesystems, wobei die Teilnehmeranschlußschaltung aus einem Hochvoltbaustein, der in erster Linie Leitungstreiber sowie Elemente zur Teilnehmerleitungszustandsindikation enthält und aus einem Signalprozessorbaustein besteht, in dem unter anderem die Analog-Digital-Wandlung und Digital-Analog-Wandlung, die Realisierung der 2-Draht-4-Draht-Wandlung, die Einstellung der 2-Drahtimpedanz, sowie die Sende- und Empfangssignalverstärkung erfolgt. Ein derartiges Testverfahren ist z.B. aus INTERNATIONAL TEST CONFERENCE PROCEEDINGS Oktober 1983, SILVER SPRING, US Seiten 750 - 766, HOFER ET AL. 'Digital signal processing test techniques for telecommunications integrated circuits' bekannt.

Bisher wurden solche Prüfungen mit einem gesonderten Prüfgerät durchgeführt, das über vorgeleistete Relais Zugriff zu bestimmten Schaltungspunkten der Teilnehmeranschlußschaltung oder der Teilnehmeranschlußleitung hatte.

Die Aufgabe der Erfindung besteht darin, ein Verfahren zum Überprüfen von Übertragungseigenschaften einer Teilnehmeranschlußschaltung, bei der die eingangs genannten Voraussetzungen gegeben sind, anzugeben, bei dessen Durchführung auf einen solchen Testzugriff über Relais verzichtet werden kann.

Erfindungsgemäß wird die Aufgabe dadurch gelöst, daß über eine digitale Schnittstelle auf verschiedene Stellen des Empfangszweiges und des Sendezweiges des Signalprozessorbausteins zugegriffen wird und aus im Betrieb der Teilnehmeranschlußschaltung oder aufgrund gesondert eingespeister und reflektierter Signale an diesen Stellen auftretenden Spannungen in unterschiedlichen Kombinationen jeweils zweier solcher Spannungen ein Korrelationsprodukt gebildet wird, durch dessen Auswertung im Signalprozessorbaustein jeweils eine Angabe über eine bestimmte übertragungstechnische Eigenschaft erhalten wird.

Gemäß weiterer Ausgestaltung der Erfindung erfolgt auch ein Zugriff und eine Korrelationsverarbeitung auf das im Hochvoltteil erhaltene Ergebnis der Längsstromauswertung.

Nachstehend wird die Erfindung anhand eines Ausführungsbeispieles unter Bezugnahme auf eine Zeichnung näher erläutert.

In der Zeichnung zeigen:
FIG 1 in schematischer Darstellung den bisher praktizierten Testzugriff über Relais,
FIG 2 eine in Hochvoltteil und Signalprozessorbaustein gegliederte Teilnehmeranschlußschaltung mit den zur Durchführung des erfindungsgemäßen Verfahrens erforderlichen Eigenschaften.

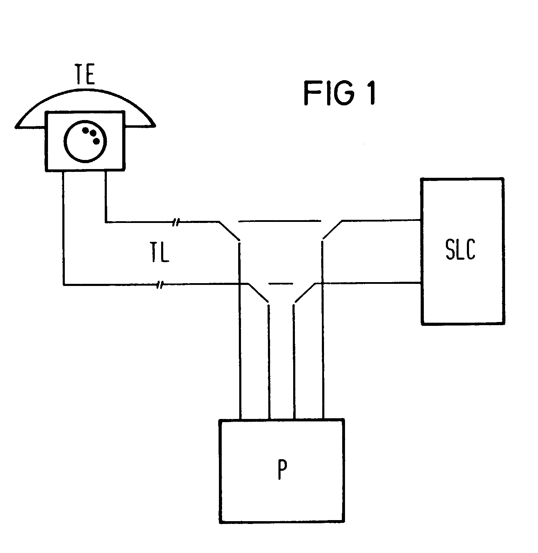

In der FIG 1 ist ein Teilnehmerendgerät TE gezeigt, das über eine Teilnehmeranschlußleitung TL an eine Teilnehmeranschlußschaltung SLC angeschlossen ist. Eine Testeinrichtung P, auf deren Eigenschaften im einzelnen nicht eingegangen wird, hat Zugriff über Relais auf die Teilnehmeranschlußleitung TL und auf die Teilnehmeranschlußschaltung SLC.

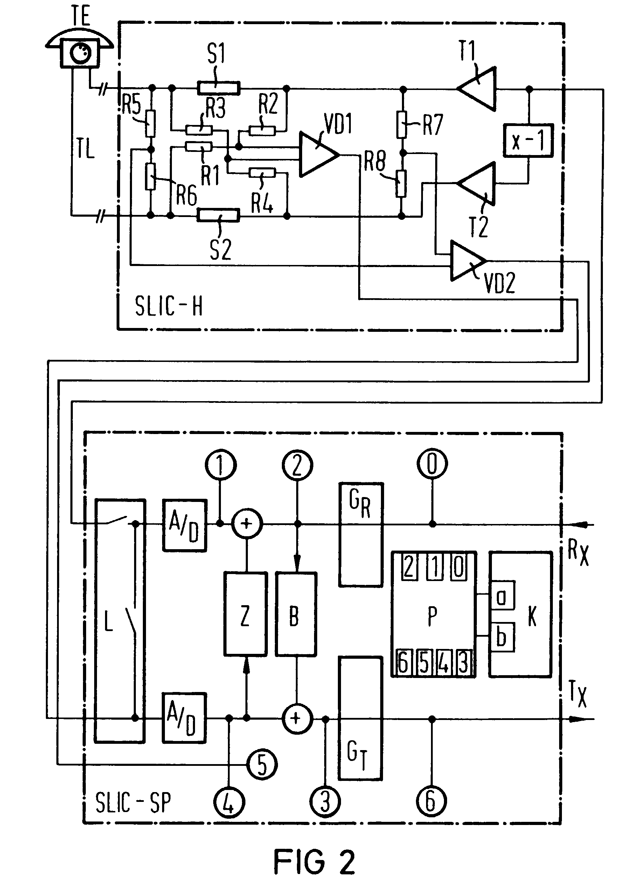

Gemäß FIG 2 ist das Teilnehmerendgerät TE über eine Teilnehmeranschlußleitung TL an den Hochvoltteil SLIC-H einer Teilnehmeranschlußschaltung angeschlossen. Als wesentliche Teile dieses Hochvoltteils sind Leitungssensoren S1 und S2 angedeutet, die der Ermittlung des Teilnehmerleitungsschleifenzustandes dienen. Über die Widerstände R1 bis R4 und einen Differenzverstärker VD1 wird ein Querstromsignal gewonnen, das als Sendesignal dient. Aus der Gegenrichtung ankommende Empfangssignale werden über Leitungstreiber T1 und T2 verstärkt und an die Adern der Teilnehmeranschlußleitung gegeben. Der Hochvoltteil zeigt außerdem Widerstände R5 bis R8, die zwischen den Adern der Teilnehmeranschlußleitung angeschlossen sind und an deren Verbindungspunkte Spannungen abgenommen werden, die den Eingängen eines Differenzverstärkers VD2 zur Gewinnung eines dem Längsstrom entsprechenden Signals zugeführt werden.

Die FIG 2 zeigt ferner als weiteren Bestandteil der Teilnehmeranschlußschaltung in symbolischer Darstellung einen Signalprozessorbaustein SLIC-SP. Die an den Empfangszweig Rx bzw. den Sendezweig Tx dieses Bausteins angeschlossene bzw. in diese Zweige eingefügten Bestandteile des Signalprozessorbausteins sind als Funktionsblöcke zu verstehen. Im einzelnen sind Einrichtungen zur Analog-Digital-Wandlung A/D bzw. zur Digital-Analog-Wandlung D/A, eine mit Z bezeichnete Gegenkopplung, die zur Einstellung der 2-Drahtimpedanz dient, eine mit B bezeichnete Kopplung, die zwischen dem Empfangszweig Rx und über ein Addierglied am Sendezweig Tx liegt, und die zur 2-Draht/4-Draht-Wandlung dient, ferner mit GR und GT bezeichnete Blöcke, die der Verstärkungseinstellung in den entsprechenden Zweigen Rx und Tx dienen, sowie der eigentliche Steuerteil P, in dem auch eine digitale Schnittstelle realisiert ist, gezeigt. Schließlich ist noch ein mit K bezeichneter Korrelationsteil dargestellt.

Durch Ziffern 0 bis 6 am Empfangszweig und am Sendezweig bzw. am herangeführten Ausgang des Differenzverstärkers VD2 sind Zugriffspunkte bezeichnet, zu denen der Signalprozessor über die erwähnte digitale Schnittstelle Zugriff hat, weswegen auch im Block P diese Ziffern angegeben sind.

Erfindungsgemäß wird aus den Spannungen, die im Betrieb der Teilnehmeranschlußschaltung an den bezeichneten Punkten auftreten, jeweils ein Paar ausgewählt und der Bildung eines Korrelationsproduktes unterworfen, aus dem dann jeweils eine bestimmte Übertragungseigenschaft ermittelt wird. Die nachstehende Tabelle zeigt dabei die verschiedenen Kombinationsmöglichkeiten bzw. verschiedene zu prüfende Übertragungseigenschaften.

| | | |
|---|---|---|
| Meßarten | Meßwert a | Meßwert b |
| Reflexionsdämpfung | 2 | 1 |
| Verstärkung Rx | 0 | 2 |
| Verstärkung Tx | 3 | 6 |
| Gabelübergangsdämpfung | 2 | 3 |
| Sendepegel auf Leitung | 2 | 4 |
| Symmetriemessung | 5 | 4 |
| Symmetriemessung | 2 | 5 |

Anstelle einer Prüfung im aktiven Betrieb der Teilnehmeranschlußschaltung kann auch in deren passivem Betrieb die Reaktion auf gesondert eingespeiste und über eine Testschleife L zurückgeführte Signale erfolgen.

## Patentansprüche

1. Verfahren zum Überprüfen von Übertragungseigenschaften einer Teilnehmeranschlußschaltung samt angeschlossener Teilnehmeranschlußleitung und daran angeschlossenem Teilnehmerendgerät eines digitalen Zeitmultiplex-Fernsprechsystems, wobei die Teilnehmeranschlußschaltung aus einem Hochvoltbaustein, der in erster Linie die Leitungstreiber sowie Elemente zur Teilnehmerleitungszustandsindikation enthält und aus einem Signalprozessorbaustein besteht, in dem unter anderem die Analog-Digitial-Wandlung und Digital-Analog-Wandlung mit zugehöriger Filterung, die Realisierung der 2-Draht-4-Draht-Wandlung, die Einstellung der 2-Drahtimpedanz sowie die Sende-und die Empfangssignalverstärkung erfolgt,
**dadurch gekennzeichnet**,
daß über eine digitale Schnittstelle auf verschiedene Stellen (0 bis 4, 6 ) des Empfangszweiges (Rx) und des Sendezweiges (Tx) des Signalprozessorbausteins zugegriffen wird und aus im Betrieb der Teilnehmeranschlußschaltung oder aufgrund gesondert eingespeister und reflektierter Signale an diesen Stellen auftretende Spannungen in unterschiedlichen Kombinationen jeweils zweier Spannungswerte ein Korrelationsprodukt gebildet wird, durch dessen Auswertung im Signalprozessorbaustein eine Angabe über eine bestimmte übertragungstechnische Eigenschaft erhalten wird.

2. Verfahren nach Anspruch 1,
**dadurch gekennzeichnet**,
daß zusätzlich ein Zugriff auf das im Hochvoltteil (SLIC-H) erhaltene Ergebnis der Längsstromauswertung und eine entsprechende Korrelationsverarbeitung erfolgt.

## Claims

1. Method for testing the transmission properties of a subscriber line circuit together with the connected subscriber line and the subscriber terminal, connected thereto, of a digital time division multiplex telephone system, the subscriber line circuit being composed of a high-voltage module, which primarily contains the line drivers and elements for subscriber line state indication, and of a signal processor module, in which, inter alia, the analog/digital conversion and digital/analog conversion with associated filtering, the realization of two-wire/four-wire conversion, the setting of the two-wire impedance and the amplification of the transmission and reception signals are effected, characterized in that access is made via a digital interface to various points (0 to 4, 6) on the reception path (Rx) and on the transmission path (Tx) of the signal processor module, and a correlation product is formed from voltages, which occur at these points during operation of the subscriber line circuit or on account of signals fed in separately and reflected, in different combinations in each case of two voltage values, the evaluation of which correlation product in the signal processor module provides information about a specific transmission property.

2. Method according to Claim 1, characterized in that access is additionally made to the result, obtained in the high-voltage section (SLIC-H), of the series current evaluation and corresponding correlation processing takes place.

## Revendications

1. Procédé pour tester des caractéristiques de transmission d'un circuit de raccordement d'abonné, y compris la ligne de raccordement d'abonné et le terminal d'abonné qui y est raccordé, d'un système téléphonique numérique à multiplexage temporel, le circuit de raccordement d'abonné étant constitué d'un composant à tension élevée, qui comporte en premier lieu les transmetteurs de ligne ainsi que des éléments destinés à l'indication de l'état de la ligne d'abonné, et d'un processeur de signaux, dans lequel s'effectuent entre autres la conversion analogique-numérique et la conversion numérique-analogique avec le filtrage associé, la mise en oeuvre de la conversion 2 fils - 4 fils, le réglage de l'impédance 2 fils, ainsi que l'amplification des signaux d'émission et de réception,
caractérisé par le fait que,
on accède par l'intermédiaire d'un interface numérique à divers points (0 à 4, 6) de la branche réceptrice (Rx) et de la branche émettrice (Tx) du processeur de signaux et on forme un produit de corrélation à partir de tensions, apparaissant en ces points au cours du fonctionnement du circuit de raccordement d'abonné ou à cause de signaux spécialement injectés et réfléchis, en combinant à chaque fois différemment deux valeurs de tensions de ce type, l'exploitation de ce produit de corrélation dans le processeur de signaux donnant à chaque fois une indication concernant une certaine caractéristique de la technique de transmission.

2. Procédé selon la revendication 1,
caractérisé par le fait que,
on effectue en plus un accès au résultat, obtenu dans la partie à tension élevée (SLIC-H), de l'exploitation du courant longitudinal et un traitement de corrélation correspondant.
